# EUROPÄISCHE PATENTANMELDUNG

(11) **EP 1 832 334 A1**
(43) Veröffentlichungstag der Anmeldung: **12.09.2007**
(21) Anmeldenummer: 06015699.9
(22) Anmeldetag: 27.07.2006
(51) Int. Cl.: B01F 3/04, C02F 1/34, C02F 11/18, C02F 3/12, C02F 11/00

(54) **Hochdruckreaktor zur Aufbereitung von Schlämmen und Verfahren zum Betreiben des Hochdruckreaktors**

(30) Priorität: 03.03.2006 DE 102006009880
(71) Anmelder: Linde Aktiengesellschaft, 65189 Wiesbaden (DE)
(72) Erfinder: Blaschek, Reimut, 82538 Geretsried (DE); Bomhard, Ilse, 82418 Murnau (DE)

(57) **Zusammenfassung**

Es wird ein Hochdruckreaktor (1) zur Aufbereitung von Biomasse enthaltenden Schlämmen, insbesondere Klärschlämmen, mit einem Schlammzulauf (2) und einem Schlammablauf (7) sowie einer Zuführung (5) für unter Druck stehendes Gas beschrieben. Um eine möglichst weitgehende Desintegration der Schlämme zu erreichen, wird vorgeschlagen, dass der Hochdruckreaktor (1) als vertikal ausgerichteter, langgestreckter Reaktor mit einem Durchmesser von 0,2 bis 2 m und einer Höhe von 2 bis 10 m ausgebildet ist. Dabei sind der Schlammzulauf (2) und der Schlammablauf (7) jeweils an einem längsseitigen Ende des Reaktors angeordnet und die Zuführung (5) für das unter Druck stehende Gas ist im unteren Bereich des Reaktors angebracht.

## Beschreibung

Die Erfindung betrifft einen Hochdruckreaktor zur Aufbereitung von Biomasse enthaltenden Schlämmen mit einem Schlammzulauf und einem Schlammablauf sowie einer Zuführung für unter Druck stehendes Gas, sowie ein Verfahren zum Betreiben des Hochdruckreaktors.

Bei der biologischen Abwasser- oder Abfallbehandlung oder sonstigen Methoden zur biologischen Behandlung von biologisch abbaubare Substanzen enthaltenden Medien entstehen in der Regel Biomasse enthaltende Schlämme, z.B. Klärschlämme oder Faulschlämme, welche entsorgt werden müssen. Um das Schlammvolumen zu verringern, sind bereits verschiedene Verfahren zur sogenannten Desintegration von Schlämmen vorgeschlagen worden, bei denen z.B. der Klär- oder Faulschlamm durch Einwirkung äußerer physikalischer, chemischer oder biologischer Kräfte zerkleinert wird. Die Einwirkung der Kräfte führt zu einem Schlammaufschluss mit dem Ziel einer besseren Entwässerbarkeit. Der Grad der Zerkleinerung des Schlamms hängt u.a. vom eingesetzten Verfahren, der eingesetzten Energie und den Eigenschaften des Schlammes ab. Bei geringen Energieeinträgen findet vornehmlich nur eine Flockenzerstörung statt, bei hohen Energieeinträgen eine Flockenzerstörung und ein Aufschluss der Mikroorganismen.

Am weitesten verbreitet sind mechanische Methoden zur Desintegration von Klärschlämmen, bei denen die Schlämme beispielsweise in Rührwerkskugelmühlen behandelt werden, wobei aufgrund der mechanischen Kräfte die Zellwände der Mikroorganismen im Schlamm aufgebrochen werden. Bekannt ist auch der Einsatz von Ultraschallhomogenisatoren, Hochdruckhomogenisatoren, Hochleistungspulstechnik, Lysat-Zentrifugentechnik und Prallstrahlverfahren. Allen diesen Methoden gemeinsam ist die Zielsetzung, durch Einwirkung von Kräften ein Freisetzen von Zellinhaltsstoffen zu erreichen, um den Schlamm weitergehender als bisher zu stabilisieren bzw. zu mineralisieren. Auch eine Bekämpfung von Schaumproblemen soll mit diesen Methoden erreicht werden. Konkrete Einsatzgebiete sind die Verbesserung der anaeroben Stabilisierung, die Bereitstellung von internen Kohlenstoffquellen für die Denitrifikation und die verbesserte Absetzbarkeit von Schlämmen, insbesondere Blähschlämmen. Die Klärschlammdesintegration ist ein Verfahrensschritt, der auf kommunalen Kläranlagen bisher jedoch nur vereinzelt angewandt wird.

Neben der mechanischen Klärschlammdesintegration sind noch folgende Desintegrationsverfahren bekannt:

Bei thermischen Verfahren werden die Schlämme üblicherweise Temperaturen von über 100 Grad Celsius ausgesetzt, wobei die Zellwände der Mikroorganismen zerstört werden. Chemische Verfahren, z.B. Nassoxidation, Ozonbehandlung, Wasserstoffperoxidbehandlung, alkalische und saure Hydrolyse, haben das Ziel, einen chemischen Aufschluss der Zellen zu bewirken. Schließlich werden vereinzelt auch biochemische Verfahren angewandt, bei denen beispielsweise durch Enzymbildung eine Hydrolyse durchgeführt wird. Die bisherigen Verfahren zur Schlammdesintegration erfordern eine relativ komplizierte Technik, einen hohen Energiebedarf und hohe Investitionskosten.

Die nicht vorveröffentlichte DE 102 004 042 773.9 betrifft ein Verfahren zur Aufbereitung von Biomasse enthaltenden Schlämmen, bei dem der Schlamm in einen Hochdruck-Reaktionsbehälter eingefüllt wird, der mit einem Gas oder Gasgemisch beaufschlagt wird. Im Hochdruck-Reaktionsbehälter wird ein derart hoher Druck aufrechterhalten, dass das Gas oder Gasgemisch in die Biomasse diffundiert. Durch plötzliches Entspannen des Hochdruck-Reaktionsbehälters fällt die Gaskonzentration in der wässrigen Phase ab, so dass in der Biomasse ein Gasüberdruck entsteht, der zu einem Aufschließen der Biomasse führt. Beispielsweise werden die Zellmembranen von in der Biomasse enthaltenen Zellen zum Platzen gebracht, so dass die Zellinhaltsstoffe freigesetzt werden. Dadurch wird beispielsweise die Entwässerbarkeit des Schlammes deutlich verbessert.

Der vorliegenden Erfindung liegt die Aufgabe zugrunde, einen Hochdruckreaktor der eingangs genannten Art so auszugestalten, dass bei geringem Investitionsaufwand eine wirtschaftliche Desintegration der Schlämme erreicht wird.

Diese Aufgabe wird erfindungsgemäß dadurch gelöst, dass der Hochdruckreaktor als vertikal ausgerichteter, langgestreckter Reaktor mit einem Durchmesser von 0,2 bis 2 m und einer Höhe von 2 bis 10 m ausgebildet ist, wobei der Schlammzulauf und der Schlammablauf jeweils an einem längsseitigen Ende des Reaktors angeordnet sind und die Zuführung für das unter Druck stehende Gas im unteren Bereich des Reaktors angebracht ist.

Bevorzugt weist der Hochdruckreaktor ein Verhältnis von Höhe zu Durchmesser von 5 bis 50 auf. Außerdem beträgt sein Volumen zweckmäßigerweise 0,1 bis 5 m³.

Die Zuführung für das unter Druck stehende Gas steht gemäß einer besonders bevorzugten Ausgestaltung der Erfindung mit einer aus mehreren Düsen bestehenden Gaseintragsvorrichtung im unteren Bereich des Hochdruckreaktors in Verbindung. Dabei sind die Düsen vorteilhafterweise über den Querschnitt des Hochdruckreaktors verteilt.

Durch die hohe und schlanke Bauweise des Hochdruckreaktors ergibt sich eine längere Aufstiegshöhe der Gasblasen, so dass die Gasausnutzung insgesamt verbessert wird. Aufgrund des geringen Reaktorquerschnitts wird darüber hinaus eine gleichmäßige Gasanreicherung des Schlammvolumens erreicht. Der Hochdruckreaktor kommt daher mit geringeren Wanddicken aus, wodurch die Behälterkosten erheblich reduziert werden können.

Der Hochdruckreaktor ist vorzugsweise für einen Betriebsdruck von 10 bis 100 bar ü ausgelegt. Bei diesen Drücken kann eine weitgehende Desintegration der Schlämme erreicht werden.

Gemäß einer Weiterbildung des Erfindungsgedankens sind mindestens zwei Hochdruckreaktoren parallel geschaltet. Eine andere Variante sieht vor, dass mindestens zwei Hochdruckreaktoren in Reihe geschaltet sind.

Die Erfindung betrifft ferner ein Verfahren zum Betreiben eines Hochdruckreaktors zur Aufbereitung von Biomasse enthaltenden Schlämmen.

Verfahrensseitig wird die gestellte Aufgabe dadurch gelöst, dass der Hochdruckreaktor in zyklischer Abfolge mit Schlamm befüllt und entleert wird und der im Hochdruckreaktor befindliche Schlamm mindestens einmal pro Zyklus durch Einleiten des unter Druck stehenden Gases und anschließendes Entspannen des Hochdruckreaktors einem Druckwechsel ausgesetzt wird.

Als Gas können Sauerstoff, Stickstoff, Kohlendioxid, Druckluft oder Mischungen aus diesen Gasen eingesetzt werden. Dabei kann der Gaseintrag kontinuierlich oder gepulst über spezielle Gaseintragsvorrichtungen mit mehreren Düsen erfolgen.

Bei einer einstufigen Betriebsweise wird das gesamte Reaktorvolumen eines Hochdruckreaktors befüllt und entleert. Dabei können bis zu drei Hochdruckreaktoren im Parallelbetrieb für eine quasi kontinuierliche Schlammbehandlung nacheinander befüllt und entleert werden.

Gemäß einer besonders bevorzugten Ausgestaltung der Erfindung ist eine zweistufige Betriebsweise vorgesehen, wobei bei einem Hochdruckreaktor das halbe Reaktorvolumen befüllt und entleert wird. Bei zwei in Reihe geschalteten Hochdruckreaktoren kann das gesamte Reaktorvolumen befüllt und entleert werden.

Zweckmäßigerweise werden 0,5 bis 10 Zyklen pro Stunde durchlaufen. Außerdem wird pro Zyklus bevorzugt ein Betriebsüberdruck des Hochdruckreaktors von 10 bis 100 bar eingestellt.

Ein gepulster Gaseintrag über Spezialdüsen während der gesamten Aufenthaltszeit des Schlammes im Hochdruckreaktor bewirkt eine verbesserte Verteilung des Gases im Schlamm und dadurch eine höhere Gasausnutzung, wodurch die Wirtschaftlichkeit des Desintegrationsverfahrens insgesamt gesteigert werden kann.

Bei einem zweistufigen Reaktorbetrieb ergeben sich höhere mechanische Beanspruchungen der Zellwände der im Schlamm enthaltenen Mikroorganismen aufgrund des mehrfachen Druckwechsels. Dadurch wird die Desintegrationswirkung verbessert.

Im folgenden soll die Erfindung anhand von in den Figuren schematisch dargestellten Ausführungsbeispielen näher erläutert werden.

### Es zeigen:

- Figur 1: einen einstufigen Betrieb mit einem Hochdruckreaktor
- Figur 2: einen einstufigen Betrieb mit drei Hochdruckreaktoren
- Figur 3: einen zweistufigen Betrieb mit halbem Reaktorvolumen
- Figur 4: einen zweistufigen Betrieb mit zwei Hochdruckreaktoren in Reihe

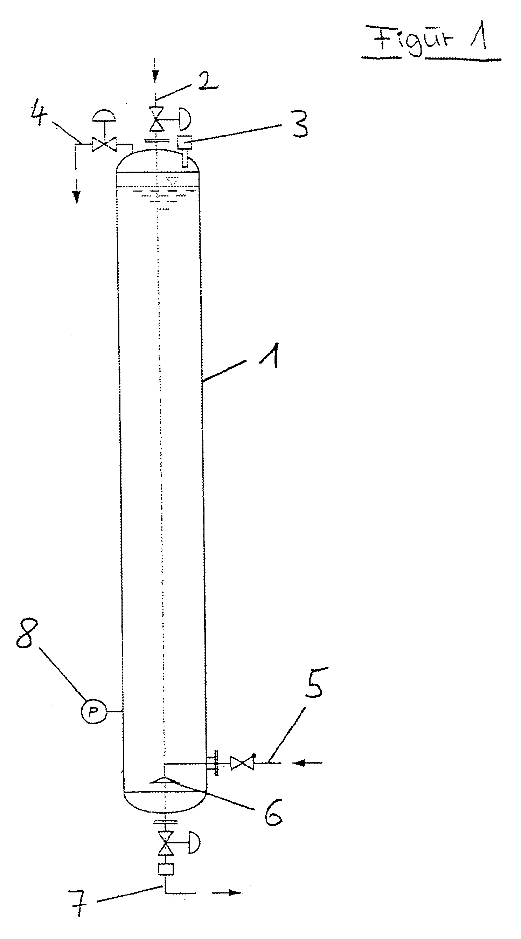

In Figur 1 ist ein Hochdruckreaktor 1 in hoher und schlanker Bauweise dargestellt. Am oberen Ende des Hochdruckreaktors 1 ist eine Zulaufleitung 2 für Klärschlamm angebracht. Eine Niveaumessung 3 im oberen Bereich des Hochdruckreaktors 1 misst den Füllstand im Hochdruckreaktor 1. Außerdem ist im Kopfbereich des Hochdruckreaktors 1 eine Entlüftungsleitung 4 angeordnet. Im unteren Bereich des Hochdruckreaktors 1 mündet eine Zufuhrleitung 5 für ein Gas, insbesondere Sauerstoff, Stickstoff, Kohlendioxid oder Druckluft bzw. Mischungen aus diesen Gasen, im Hochdruckreaktor 1. Die Gaszuleitung 5 steht mit einer in der Figur nicht dargestellten Gas-, Mess- und Regeleinheit in Verbindung. Im Hochdruckreaktor 1 endet die Gaszufuhrleitung 5 an einer Gasdüse 6. Durch den Gaseintrag wird der Druck im Hochdruckreaktor erhöht. Über ein Kontaktmanometer 8 wird der Druck im Hochdruckreaktor gemessen. Am unteren Ende des Hochdruckreaktors 1 führt eine Ablaufleitung 7 für den desintegrierten Klärschlamm vom Hochdruckreaktor 1 weg.

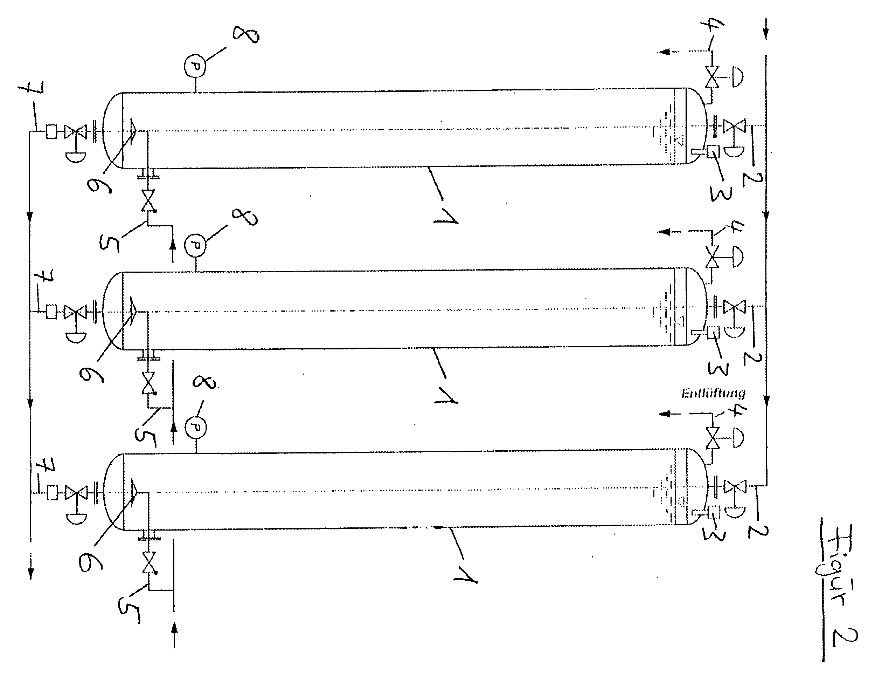

In Figur 2 ist eine Parallelschaltung von gleichartigen Hochdruckreaktoren 1 gezeigt. Dieselben Anlagenteile sind mit denselben Bezugsziffern bezeichnet wie in Figur 1.

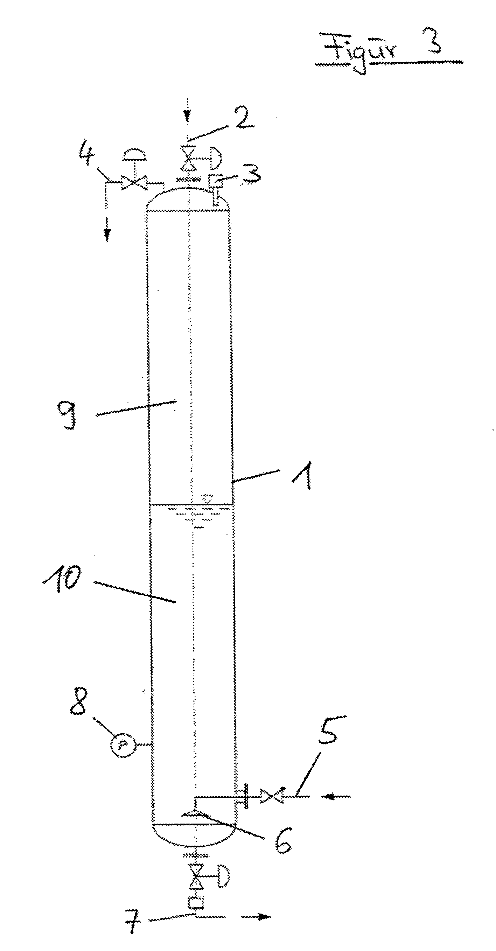

Figur 3 betrifft eine zweistufige Behandlung des Klärschlamms in einem einzigen Hochdruckreaktor 1. Der Aufbau des Hochdruckreaktors 1 entspricht dem in Figur 1 gezeigten Hochdruckreaktor. Beim zweistufigen Betrieb dieses Hochdruckreaktors 1 wird pro Zyklus das halbe Reaktorvolumen mit Klärschlamm befüllt und entleert. In der vorliegenden Darstellung ist die obere Hälfte 9 des Hochdruckreaktors 1 als Füllvolumen vorgesehen, während die untere Hälfte 10 das Volumen für die zweite Behandlung darstellt.

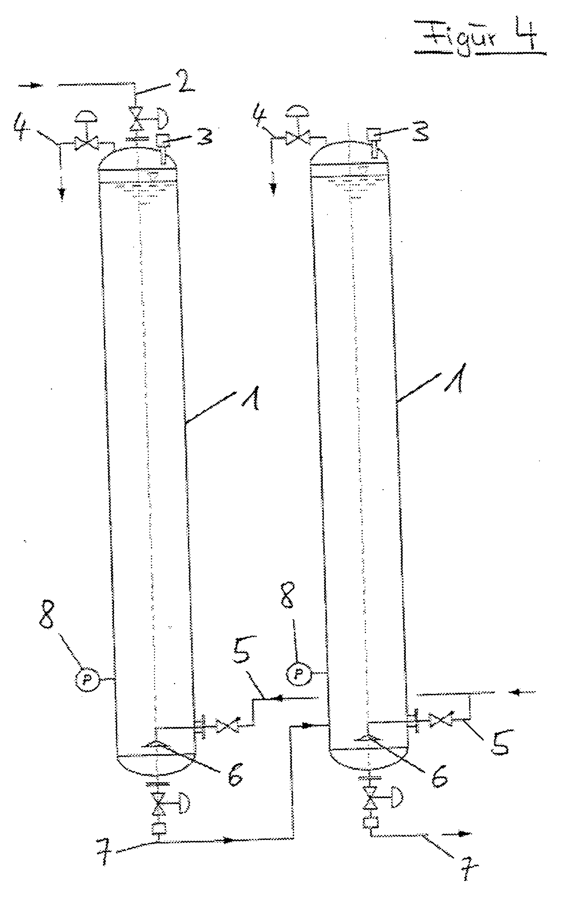

In Figur 4 ist ein zweistufiger Betrieb mit zwei in Reihe geschalteten Hochdruckreaktoren dargestellt. Die beiden Hochdruckreaktoren, die in gleicher Weise aufgebaut sind, sind über die Klärschlammabzugsleitung 7 des links dargestellten Hochdruckreaktors 1 miteinander verbunden. Die Klärschlammabzugsleitung 7 mündet im unteren Bereich des rechts dargestellten Hochdruckreaktors 1. Auf diese Weise kann der im links dargestellten Hochdruckreaktor 1 bereits vorbehandelte Klärschlamm im rechts dargestellten Hochdruckreaktor 1 nachbehandelt werden.

## Patentansprüche

1. Hochdruckreaktor zur Aufbereitung von Biomasse enthaltenden Schlämmen mit einem Schlammzulauf und einem Schlammablauf sowie einer Zuführung für unter Druck stehendes Gas, **dadurch gekennzeichnet, dass** der Hochdruckreaktor (1) als vertikal ausgerichteter, langgestreckter Reaktor mit einem Durchmesser von 0,2 bis 2 m und einer Höhe von 2 bis 10 m ausgebildet ist, wobei der Schlammzulauf (2) und der Schlammablauf (7) jeweils an einem längsseitigen Ende des Reaktors angeordnet sind und die Zuführung (5) für das unter Druck stehende Gas im unteren Bereich des Reaktors angebracht ist.

2. Hochdruckreaktor nach Anspruch 1, **dadurch gekennzeichnet, dass** er ein Verhältnis von Höhe zu Durchmesser von 5 bis 50 aufweist.

3. Hochdruckreaktor nach Anspruch 1 oder 2, **dadurch gekennzeichnet, dass** er ein Volumen von 0,1 bis 5 m³ aufweist.

4. Hochdruckreaktor nach einem der Ansprüche 1 bis 3, **dadurch gekennzeichnet, dass** die Zuführung (5) für das unter Druck stehende Gas mit einer aus mehreren Düsen (6) bestehenden Gaseintragsvorrichtung im unteren Bereich des Hochdruckreaktors in Verbindung steht.

5. Hochdruckreaktor nach Anspruch 4, **dadurch gekennzeichnet, dass** die Düsen (6) über den Querschnitt des Hochdruckreaktors (1) verteilt sind.

6. Hochdruckreaktor nach einem der Ansprüche 1 bis 5, **dadurch gekennzeichnet, dass** der Hochdruckreaktor (1) für einen Betriebsdruck von 10 bis 100 bar ü ausgelegt ist.

7. Hochdruckreaktor nach einem der Ansprüche 1 bis 6, **dadurch gekennzeichnet, dass** mindestens ein zweiter Hochdruckreaktor (1) parallel geschaltet ist.

8. Hochdruckreaktor nach einem der Ansprüche 1 bis 7, **dadurch gekennzeichnet, dass** mindestens ein zweiter Hochdruckreaktor (1) in Reihe geschaltet ist.

9. Verfahren zum Betreiben eines Hochdruckreaktors nach einem der Ansprüche 1 bis 8 zur Aufbereitung von Biomasse enthaltenden Schlämmen, **dadurch gekennzeichnet, dass** der Hochdruckreaktor (1) in zyklischer Abfolge mit Schlamm befüllt und entleert wird und der im Hochdruckreaktor (1) befindliche Schlamm mindestens einmal pro Zyklus durch Einleiten des unter Druck stehenden Gases und anschließendes Entspannen des Hochdruckreaktors (1) einem Druckwechsel ausgesetzt wird.

10. Verfahren nach Anspruch 9, **dadurch gekennzeichnet, dass** 0,5 bis 10 Zyklen pro Stunde durchlaufen werden.

11. Verfahren nach Anspruch 9 oder 10, **dadurch gekennzeichnet, dass** pro Zyklus ein Betriebsüberdruck des Hochdruckreaktors (1) von 10 bis 100 bar eingestellt wird.

12. Verfahren nach einem der Ansprüche 9 bis 11, **dadurch gekennzeichnet, dass** der Hochdruckreaktor (1) zweistufig betrieben wird, wobei pro Zyklus das halbe Reaktorvolumen mit Schlamm befüllt und entleert wird.

13. Verfahren nach einem der Ansprüche 9 bis 12, **dadurch gekennzeichnet, dass** bei einer Reihenschaltung von zwei Hochdruckreaktoren (1) eine zweistufige Behandlung in der Weise erfolgt, dass jeweils das gesamte Reaktorvolumen befüllt und entleert wird.

14. Verfahren nach einem der Ansprüche 9 bis 13, **dadurch gekennzeichnet, dass** das Gas während der gesamten Aufenthaltszeit des Schlammes im Hochdruckreaktor (1) pulsartig eingetragen wird.
